# FASCICULE DE BREVET EUROPEEN

(11) **EP 0 617 272 B1**
(45) Date de publication et mention de la délivrance du brevet: **03.06.1998**
(21) Numéro de dépôt: 94400359.9
(22) Date de dépôt: 18.02.1994
(51) Int. Cl.: G01N 15/08, A24C 5/34

(54) **Dispositif pour la mesure de la porosité d'un élément de filtre**
norrichtung zur Porositätsmessung eines Filterelementes
Device for measuring the porosity of a filter device

(30) Priorité: 26.03.1993 FR 9303799
(43) Date de publication de la demande: 28.09.1994
(73) Titulaire: SOCIETE NATIONALE D'EXPLOITATION INDUSTRIELLE DES TABACS ET ALLUMETTES, 75340 Paris Cedex 07 (FR)
(72) Inventeur: Rousseau, Alain, F-45100 Orleans (FR)
(74) Mandataire: de Saint-Palais, Arnaud Marie

(56) Documents cités:
- EP-A- 0 007 836
- GB-A- 2 019 190
- US-A- 4 627 448

## Description

La présente invention concerne un dispositif pour la mesure de la porosité d'un élément de filtre se présentant sous la forme d'une tige ou d'un bâtonnet de forme sensiblement cylindrique.

Elle s'applique notamment, mais non exclusivement, à la mesure du tirage des bâtonnets filtres utilisés dans les cigarettes à bout filtre.

On sait que pour ce type d'application, on a déjà proposé un dispositif d'encapsulation faisant intervenir un élément tubulaire rigide dont la paroi interne est doublée par une membrane tubulaire élastique fixée par ses bordures extrêmes aux deux extrémités dudit élément de manière à délimiter un volume intercalaire dans lequel une dépression peut être réalisée.

La section délimitée par la membrane au repos est prévue sensiblement égale à celle du filtre que l'on veut mesurer, et légèrement inférieure à celle de l'élément tubulaire.

Ainsi, en engendrant une dépression dans le volume intercalaire, on provoque une rétraction de la membrane qui tend à venir s'appliquer contre la paroi intérieure de l'élément tubulaire. De ce fait, la section délimitée par la membrane devient supérieure à celle du filtre, lequel peut donc passer librement à l'intérieur de l'ensemble constitué par les deux pièces.

Une fois le filtre disposé à l'intérieur de cet ensemble, on rétablit la pression atmosphérique à l'intérieur du volume intercalaire. La membrane tubulaire se déploie alors à la façon d'un sphincter sous l'effet de sa propre élasticité pour venir s'appliquer et "encapsuler" le filtre.

La porosité ou le tirage du filtre peut être ensuite déterminée en mettant sous dépression l'un des orifices de l'élément tubulaire, tandis que l'autre est mis à l'air libre et en effectuant par exemple une mesure de pression à débit constant de l'air aspiré au travers du filtre.

Pour permettre d'effectuer, à l'aide d'une structure de ce genre, des mesures d'éléments de filtre présentant des longueurs différentes, on a proposé de régler la longueur utile de la membrane souple grâce à un manchon tubulaire pouvant coulisser axialement à l'intérieur de la membrane de manière à contenir l'expansion de la membrane sur une partie de sa longueur. Les dimensions de ce manchon sont prévues de manière à ce que dans cette partie, le diamètre du sphincter soit supérieur à celui du filtre.

Il s'avère qu'un dispositif de ce genre présente un certain nombre d'inconvénients.

Tout d'abord, le réglage de la longueur d'encapsulation, qui peut s'effectuer de façon continue, n'est réalisable qu'en mode contrôle seulement.

Par ailleurs, le positionnement du manchon tubulaire en fonction de la longueur du filtre est difficilement automatisable : Il nécessite un système relativement complexe de déplacement du tube et de mesure de déplacement de ce dernier.

En outre, ce dispositif est nécessairement encombrant en hauteur : Pour mesurer un filtre encapsulé sur la longueur maximum, le tube devra sortir complètement de la membrane tubulaire, augmentant d'autant la hauteur totale de la tête de mesure.

On constate également que dans un même cycle de mesure de tirage, il n'est pas possible d'effectuer successivement une mesure avec encapsulation totale du filtre, et une mesure avec encapsulation partielle de ce filtre, pour obtenir un paramètre dépendant de la porosité du gainage du filtre.

L'invention a donc plus particulièrement pour but de supprimer ces inconvénients.

A cet effet, elle propose un dispositif pour la mesure de la porosité d'un élément de filtre, ce dispositif faisant intervenir des moyens d'encapsulation de l'élément de filtre agissant à la façon d'un sphincter, des moyens permettant d'engendrer un débit d'air au travers de l'élément de filtre, une fois l'élément de filtre encapsulé, et des moyens permettant de mesurer au moins un paramètre relatif au courant de fluide qui traverse l'élément de filtre.

Un tel dispositif est par exemple divulgué dans le document EP-A-0 007 836.

Selon l'invention, ce dispositif est caractérisé en ce que les moyens d'encapsulation comprennent une succession de modules d'encapsulation disposés coaxialement bout à bout et agissant chacun à la façon d'un sphincter, indépendamment des autres, grâce à des moyens de commande distincts de ceux des autres.

Il est clair que grâce à une telle disposition, il devient possible de faire varier la hauteur d'encapsulation et l'adapter à la longueur des filtres en modifiant le nombre de modules activés.

Chaque module d'encapsulation pourra comprendre un corps tubulaire, éventuellement cylindrique, dont la paroi cylindrique interne est doublée par une membrane tubulaire élastique qui délimite avec ladite paroi un volume intercalaire dont la pression peut être modifiée par un circuit de commande de manière à ce que ladite membrane puisse prendre les deux états suivants :
- un état rétracté vers ladite paroi en offrant une section de passage maximum,
- un état déployé vers le centre du corps, dans lequel elle offre une section de passage réduite, de manière à pouvoir s'appliquer et encapsuler partiellement un élément du filtre préalablement disposé dans le corps.

Bien entendu, le passage de l'un à l'autre des deux états pourra s'effectuer en admettant un fluide sous pression ou, au contraire, en créant une dépression dans le volume intercalaire, le retour à la première position s'effectuant grâce à l'élasticité de la membrane.

Selon une variante d'exécution de l'invention, les moyens d'encapsulation comprennent un corps unique dont la paroi interne est doublée par une succession de tronçons de membrane raccordés bout à bout les uns aux autres, de façon étanche, grâce à une multiplicité d'entretoises annulaires élastiques en contact étanche avec ledit corps, de manière à constituer une succession de volumes intercalaires délimités chacun par la paroi interne du corps, un tronçon de membrane et deux entretoises annulaires successives, chacun de ces volumes étant relié à un circuit de commande distinct de celui des autres.

Des modes de réalisation de l'invention seront décrits ci-après, à titre d'exemples non limitatifs, avec référence aux dessins annexés dans lesquels :
Les figures 1 et 2 sont des vues respectivement en coupe axiale et en élévation d'une tête de mesure du tirage de filtres de cigarettes, avec réglage manuel de la hauteur d'encapsulation ;
La figure 3 est une coupe axiale d'un dispositif d'un type similaire à celui de la figure 1 mais dans lequel les réglages sont assurés par un circuit de commande automatisable ;
La figure 4 est une représentation schématique d'une installation pour la mesure automatique du tirage des filtres de cigarettes.

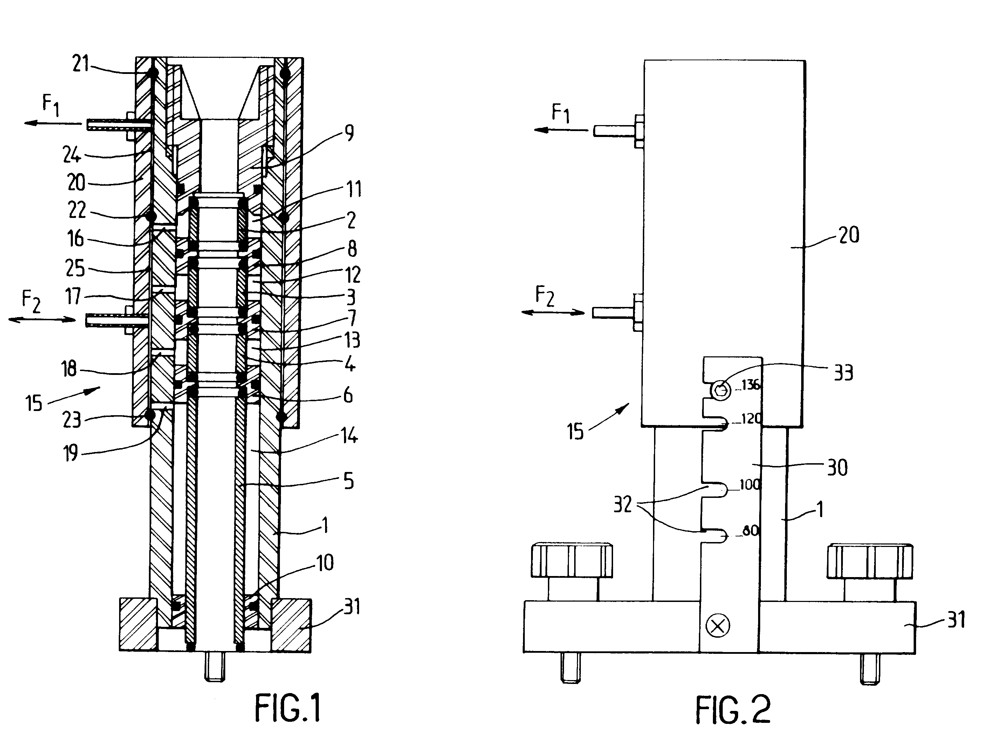

Telle que représentée sur la figure 1, la tête de mesure comprend un corps tubulaire 1 sensiblement cylindrique à l'intérieur duquel sont disposés bout à bout, une pluralité de tronçons de membrane tubulaires 2, 3, 4, 5, coaxiaux, reliés les uns aux autres de façon étanche grâce à des entretoises annulaires 6, 7, 8, 9, 10 fixées de façon étanche sur le corps 1. L'étanchéité entretoise/membrane/corps est ici réalisée à l'aide de joints toriques.

Ces entretoises 6 à 10 délimitent avec les tronçons de membrane et le corps, des chambres intercalaires 11, 12, 13, 14 communiquant avec un distributeur 15 associé au corps 1, par l'intermédiaire de perçages radiaux 16, 17, 18, 19.

Dans cet exemple, le distributeur consiste en un tiroir formé par un manchon tubulaire cylindrique 20, monté coulissant sur le corps 1, par l'intermédiaire de trois joints d'étanchéité 21, 22, 23 axialement décalés de manière à délimiter deux chambres annulaires 24, 25 dont l'une est reliée à un circuit d'aspiration permanente (flèche F₁) tandis que l'autre est reliée à un circuit de commande (flèche F₂) apte à engendrer une aspiration, ou une mise à l'atmosphère, voire même une injection de fluide sous pression.

Le tronçon de membrane inférieur 5 ou sphincter de base présente une hauteur égale à la plus petite longueur de filtre. Il est à l'état rétracté, par suite d'une aspiration dans la chambre 14 pour permettre l'introduction du bâtonnet filtre puis son éjection. Il passe à l'état déployé (mise à l'atmosphère ou sous pression de la chambre) pour assurer l'encapsulation du filtre pendant le processus de mesure de tirage.

Les tronçons de membrane supérieurs 2, 3 et 4 sont destinés à être maintenus rétractés, par une aspiration permanente dans les chambres 11, 12, 13 ou commandés simultanément avec le sphincter de base 5, en fonction de la longueur du bâtonnet filtre.

Pour faciliter le processus de réglage en fonction de cette longueur, la distance séparant axialement les deux joints 22, 23 est légèrement supérieure à la distance comprise entre les perçages 16 et 19 de manière à ce qu'en position haute du manchon 20, les quatre perçages 16, 17, 18, 19 débouchent dans la chambre 25. La position basse du manchon 20 est telle que seul le perçage 19 soit en communication avec la chambre 25. La distance séparant les joints 21, 22 est, quant à elle, conçue de manière à ce qu'en position basse du tronçon, les perçages 16, 17 et 18 débouchent dans la chambre 24.

A titre d'exemple, les tronçons de membrane 5, 4, 3, 2 pourront présenter respectivement des longueurs de 80 mm, 20 mm, 20 mm et 16 mm, et ce, pour des bâtonnets de filtres pouvant présenter des longueurs de 80 mm, 100 mm, 120 mm et 136 mm.

Pour mesurer un bâtonnet filtre de 80 mm de long, l'élément tubulaire 20 sera placé en position basse de manière à ce que seul le perçage 19 soit en communication avec la chambre 25 et qu'ainsi seul le sphincter de base 5 soit amené en position déployée pendant la mesure.

Pour mesurer un bâtonnet de filtre de 120 mm, l'élément tubulaire sera placé en position intermédiaire de manière à ce que les perçages 17, 18 et 19 se trouvent en communication avec la chambre 25 et qu'ainsi les tronçons de membrane 5, 4, 3 puissent passer en position déployée pendant la mesure.

Pour mesurer un bâtonnet de filtre de 136 mm, le manchon tubulaire 20 sera amené en position haute de manière à ce que tous les perçages 16 à 19 soient en communication avec la chambre 25 et qu'ainsi les membranes 2 à 5 soient commandées en synchronisation.

Une réglette 30 comportant des encoches 32 correspondant à chaque position de mesure est fixée sur la base 31 qui supporte le corps 1.

Le manchon tubulaire 20 comprend un ergot 33 pouvant s'engager dans chacune de ces encoches 32 de manière à être retenu dans la position axiale souhaitée pour la mesure envisagée.

Le réglage de la position du manchon tubulaire 20 est assuré par rotation autour de son axe principal d'une valeur suffisante pour dégager l'ergot 33 de l'encoche 32 dans laquelle il était inséré puis, après une translation dans le sens voulu, repositionnement de l'ergot 33 dans l'encoche correspondant au réglage souhaité par une nouvelle rotation dans le sens inverse du manchon 20.

Bien entendu, l'invention ne se limite pas au mode d'exécution précédemment décrit.

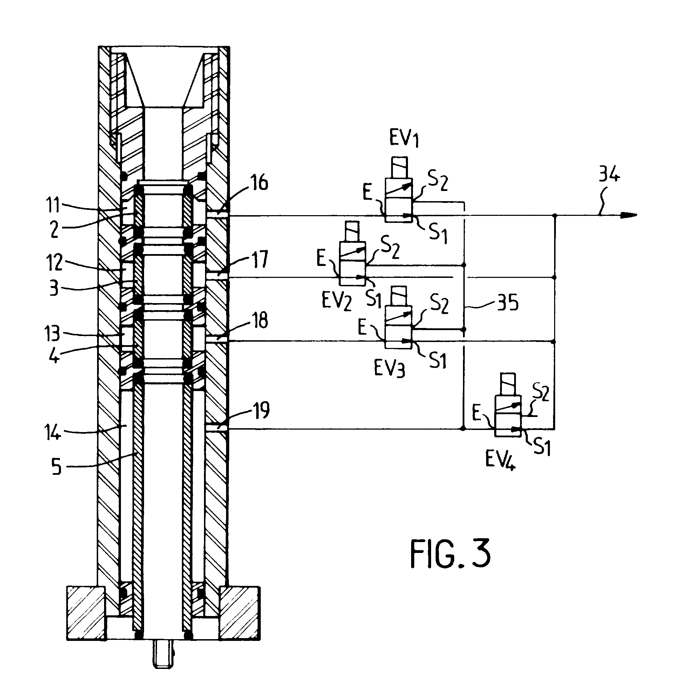

Ainsi, au lieu d'utiliser un distributeur de type à tiroir, la tête d'encapsulation pourrait être associée à un circuit de distribution commandé par des électrovannes, tel que celui représenté figure 3.

Dans cet exemple, les perçages 16, 17, 18, 19 réalisés dans le corps 1 sont reliés à quatre électrovannes respectives EV₁ à EV₄ dont les sorties directes S₁ sont connectées à un circuit d'aspiration permanente 34. Les sorties de dérivation S₂ des électrovannes EV₁ à EV₃ sont reliées à l'entrée de l'électrovanne EV₄. La sortie de dérivation S₂ de cette dernière débouche, quant à elle, à l'extérieur (à l'atmosphère) ou même dans un circuit d'admission de fluide sous pression.

Le fonctionnement de ce circuit de distribution est alors le suivant :

Pour permettre l'engagement du bâtonnet de filtre, les électrovannes SV₁ à SV₄ sont commandées de manière à occuper la position qu'elles occupent sur la figure 3, dans laquelle l'entrée E est reliée à la sortie directe S₁, de sorte que les chambres intercalaires 11 à 14 sont soumises à une aspiration permanente. Les tronçons de membrane 5 à 2 se trouvent donc en position rétractée et offrent donc une section de passage supérieure à la section du bâtonnet de filtre.

L'encapsulation s'effectuera ensuite en commutant au moins l'électrovanne EV₄ et, selon la longueur du bâtonnet, une ou plusieurs des électrovannes suivantes EV₃, EV₂, EV₁.

Du fait de cette commutation, les entrées E des électrovannes commutées sont reliées à leur sortie de dérivation S₂ et donc au circuit de dérivation 35 qui est mis à l'atmosphère (ou sur le circuit éventuel de fluide sous pression) par la sortie S₂ de l'électrovanne EV₄.

Les tronçons de membrane correspondant aux électrovannes qui ont été commutées passent à l'état déployé en encapsulant le bâtonnet de filtre, tandis que les autres tronçons de membrane demeurent à l'état rétracté.

Une fois la mesure de tirage effectuée, la phase d'éjection s'obtient en ramenant les électrovannes EV₁ à EV₄ à leur état initial de manière à provoquer la rétraction des tronçons de membrane 2 à 5.

Le bâtonnet qui vient d'être testé peut alors être ôté, par exemple en le laissant descendre par gravité.

Un avantage important du dispositif précédemment décrit consiste en ce qu'il permet d'effectuer la détermination de la porosité du gainage, par exemple en papier, des bâtonnets filtres.

Dans ce cas, il est nécessaire d'effectuer deux mesures consécutives, à savoir :
- une mesure de tirage normalisé TFE qui est faite avec encapsulation totale du bâtonnet de filtre, et
- une mesure TPE qui est faite avec encapsulation partielle, de manière à intégrer un facteur relatif à la porosité du papier de gainage.

Bien entendu, dans le cas où le bâtonnet de filtre testé comprend un gainage non poreux, lors de la mesure TPE, le flux d'air passant au travers le filtre sera identique à celui relevé lors de la mesure TFE.

Par contre, dans le cas d'un bâtonnet de filtre à gainage poreux, la mesure TPE sera différente de la mesure TFE en raison du flux d'air aspiré qui pénètre latéralement à l'intérieur du filtre, au travers du gainage. L'écart entre les deux mesures est donc représentatif de la porosité du gainage.

En pratique, on établit préalablement une valeur nominale de la mesure TPE qui sera définie dans les spécifications des bâtonnets filtres. Il sera alors possible lors des contrôles de fabrication, de vérifier que la valeur TPE mesurée correspond à la valeur nominale et donc de contrôler la porosité du gainage utilisé, et ce, en complément de la mesure du tirage du filtre totalement encapsulé.

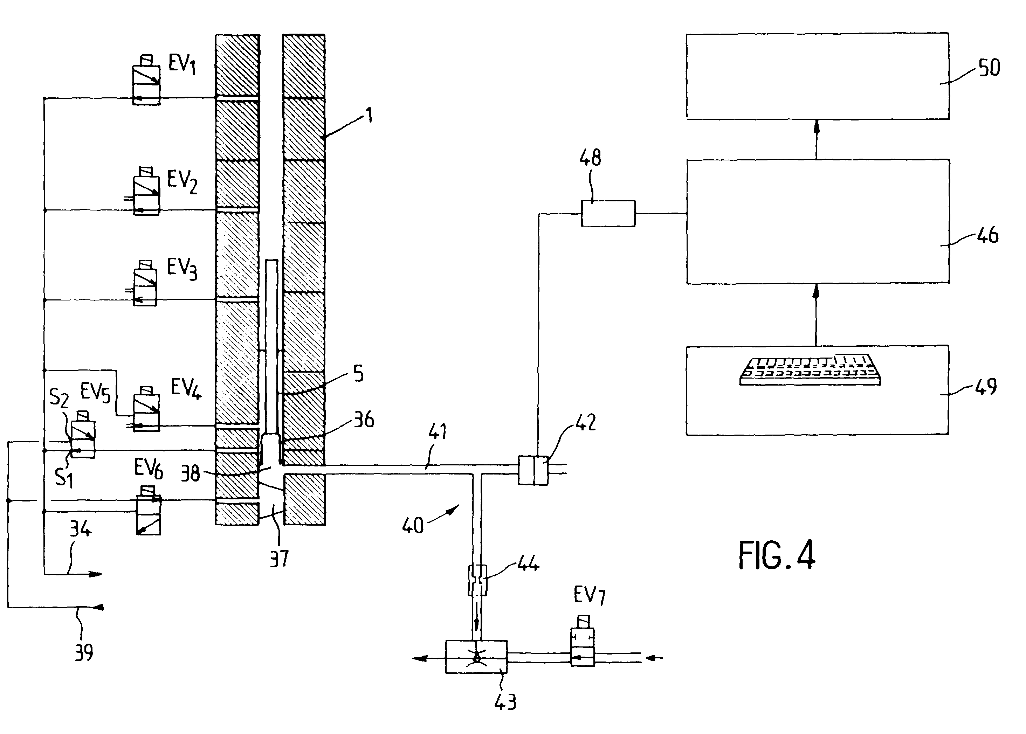

L'installation représentée figure 4 fait intervenir une tête d'encapsulation du type de celle représentée sur la figure 3 et à laquelle est associé un circuit de distribution comprenant quatre électrovannes de commande EV₁ à EV₄.

Cette tête d'encapsulation comprend en outre, logés dans le corps tubulaire 1, en dessous du sphincter de base 5, successivement :
- un tronçon de membrane élastique 36 formant un sphincter supplémentaire qui sert de butée de retenue du bâtonnet de filtre, lors de son introduction,
- un obturateur à expansion 37 comprenant une poche élastiquement déformable commandée pneumatiquement de manière à pouvoir passer d'une position ouverte où elle se trouve à l'état rétracté sous l'effet d'une aspiration, à une position déployée ou fermée où elle obture hermétiquement le corps 1 en délimitant à l'intérieur de celui-ci une chambre d'aspiration 38.

La commande de ce sphincter supplémentaire 36 et de cet obturateur 37 est assurée par un circuit de commande faisant intervenir deux électrovannes respectives EV₅ et EV₆ du type des électrovannes EV₁ à EV₄.

La sortie directe de l'électrovanne EV₅ est connectée au circuit d'aspiration 34, tandis que sa sortie de dérivation S₂ est connectée à un circuit de fluide sous pression 39.

A l'inverse, la sortie directe de l'électrovanne EV₆ est connectée au circuit 39, tandis que sa sortie de dérivation est connectée au circuit 34.

La chambre d'aspiration 38 est en communication grâce à un perçage, avec un circuit de mesure du tirage 40, étant entendu que, par définition, le tirage d'un filtre de cigarette est la perte de charge mesurée à une extrémité de celui-ci, lorsqu'il est traversé axialement par un débit normalisé de 17,5 ml/s, l'autre extrémité étant à l'atmosphère, l'enveloppe du filtre ou gainage étant rendue imperméable à l'air par une enveloppe d'encapsulation sur toute sa longueur. Cette mesure est appelée TFE (Tirage Filtre totalement Encapsulé).

Le circuit de mesure 40 comprend donc un conduit d'aspiration 41 équipé d'un capteur de pression différentielle 42 à sortie analogique, et relié à un organe générateur de vide statique 43 par l'intermédiaire d'un orifice à débit critique 44 spécialement calibré de manière à obtenir avec précision un débit de 17,5 ml/s.

Le générateur de vide 43 utilisé dans cet exemple est de type venturi qui, alimenté par un flux d'air comprimé contrôlé par une électrovanne EV₇, permet d'engendrer une aspiration.

L'ensemble du dispositif est piloté par un micro-ordinateur 46 qui assure les tâches de commande des électrovannes EV₁ à EV₇ en fonction du cycle de mesure et qui gère les données.

L'acquisition des valeurs de tirages (pressions détectées par le capteur) par le micro-ordinateur 46 s'effectue par l'intermédiaire d'un convertisseur analogique/numérique 48.

Les spécifications telles que les valeurs cible, mini-maxi, les seuils d'alarme pour chacun des paramètres TPE et TFE, la longueur des filtres sont introduites préalablement dans le système de traitement par le clavier 49 associé au micro-ordinateur.

Ce système exécute le traitement des données, les tâches d'affichage (afficheur 50) des valeurs TPE et TFE, la comparaison de ces valeurs par rapport aux mini et maxi, le déclenchement des alarmes, soit par voie d'affichage, soit par des moyens sonores et le calcul en fin de lot des statistiques nécessaires à la gestion de la production.

Un cycle complet de mesure pourra comprendre successivement une phase d'introduction du filtre, une phase de mesure TPE, une phase de mesure TFE et une phase d'éjection.

Lors de la phase d'éjection, les tronçons de membrane 2 à 5 sont amenés à l'état rétracté de manière à laisser le passage du filtre, tandis que le sphincter de retenue 36 est disposé à l'état déployé. L'obturateur 37 est alors en position ouverte.

Pour effectuer une phase de mesure TPE, l'obturateur 37 est placé en position fermée, pour étanchéifier la chambre d'aspiration 38, et le sphincter de base 5 est mis en position déployée pour effectuer une encapsulation partielle du filtre. Les tronçons de membrane 2 à 4 sont maintenus à l'état rétracté.

On procède à l'établissement d'une phase d'aspiration dans le circuit de mesure 40 de manière à atteindre un débit déterminé, par exemple de 17,5 ml/s.

Le micro-ordinateur 46 effectue alors la saisie de la valeur TPE détectée par le capteur 42.

La phase de mesure TFE peut être ensuite exécutée en amenant à l'état déployé tout ou partie des tronçons de membrane 4, 3, 2, selon la longueur du filtre, et ce, afin de réaliser une encapsulation complète du filtre.

Le micro-ordinateur 46 effectue alors la saisie des valeurs TFE détectées par le capteur 42 puis effectue un traitement de ces valeurs, leur affichage, le déclenchement d'une alarme si nécessaire, et le stockage des résultats.

La phase d'éjection comprend, quant à elle, un arrêt de l'aspiration dans le circuit de mesure 41, le retour des tronçons de membrane 2 à 5 et 36 à l'état rétracté, ainsi que de l'obturateur 37 à l'état ouvert et la récupération du filtre en dessous du corps 1.

## Revendications

1. Dispositif pour la mesure de la porosité d'un élément de filtre, ce dispositif faisant intervenir des moyens d'encapsulation de l'élément de filtre agissant à la façon d'un sphincter, des moyens permettant d'engendrer un débit d'air à travers l'élément de filtre, une fois l'élément de filtre encapsulé, et des moyens permettant de mesurer au moins un paramètre relatif au courant de fluide qui traverse l'élément de filtre,
caractérisé en ce que les moyens d'encapsulation comprennent une succession de modules d'encapsulation (2 à 5) disposés coaxialement bout à bout et agissant chacun à la façon d'un sphincter, indépendamment des autres grâce à des moyens de commande distincts de ceux des autres.

2. Dispositif selon la revendication 1,
caractérisé en ce que le nombre de modules d'encapsulation (2 à 5) utilisé est fonction de la longueur de l'élément de filtre, de manière à pouvoir encapsuler des filtres de différentes longueurs.

3. Dispositif selon l'une des revendications 1 et 2,
caractérisé en ce que les modules d'encapsulation (2 à 5) font intervenir un corps tubulaire (1) dont la paroi cylindrique interne est doublée par une membrane tubulaire élastique qui délimite, avec ladite paroi, un volume intercalaire (11 à 14) dont la pression peut être modifiée par un circuit de commande de manière à ce que ladite membrane puisse prendre les deux états suivants :
- un état rétracté vers ladite paroi en offrant une section de passage maximum,
- un état déployé vers le centre du corps (1), dans lequel elle offre une section de passage réduite de manière à pouvoir s'appliquer et encapsuler partiellement un élément de filtre disposé dans le corps (1) pendant qu'elle était à l'état rétracté.

4. Dispositif selon la revendication 3,
caractérisé en ce que le passage de l'un à l'autre des susdits états s'effectue en admettant, à l'intérieur du volume intercalaire (11 à 14), un fluide sous pression ou, au contraire, en créant une dépression à l'intérieur de ce volume.

5. Dispositif selon l'une des revendications précédentes,
caractérisé en ce que le susdit corps tubulaire (1) est commun à tous les modules d'encapsulation (2 à 5).

6. Dispositif selon la revendication 5,
caractérisé en ce que les membranes tubulaires élastiques des différents modules d'encapsulation (2 à 5) sont disposées bout à bout et raccordées de façon étanche grâce à une multiplicité d'entretoises annulaires (6 à 10) en contact étanche avec ledit corps, de manière à constituer une succession de volumes intercalaires (11 à 14) délimités chacun par la paroi interne du corps (1), un tronçon de membrane et deux entretoises annulaires successives, chacun de ces volumes (11 à 14) étant relié à un circuit de commande (16 à 19) distinct de celui des autres.

7. Dispositif selon la revendication 6,
caractérisé en ce que les volumes intercalaires communiquent avec un distributeur (15) monté sur le corps, par l'intermédiaire de perçages radiaux respectifs (16 à 19).

8. Dispositif selon la revendication 7,
caractérisé en ce que le distributeur consiste en un tiroir formé par un élément tubulaire cylindrique (20) monté coulissant sur le corps (1) par l'intermédiaire de trois joints d'étanchéité (21, 22, 23) axialement décalés de manière à délimiter deux chambres annulaires (24, 25) dont l'une est reliée à un circuit d'aspiration permanent, tandis que l'autre est reliée à un circuit de commande apte à engendrer une aspiration, ou une mise à l'atmosphère, voire à une injection de fluide sous pression.

9. Dispositif selon l'une des revendications précédentes,
caractérisé en ce que les susdits moyens d'encapsulation comprennent en outre, au-delà d'un module d'encapsulation de base (5), successivement :
- un tronçon de membrane élastique (36) formant un sphincter supplémentaire qui sert de butée de retenue du bâtonnet de filtre, lors de son introduction,
- un obturateur (37) pouvant passer d'une position ouverte à une position fermée où elle obture hermétiquement le corps (1) en délimitant à l'intérieur de celui-ci une chambre d'aspiration.

10. Dispositif selon la revendication 9,
caractérisé en ce que la chambre d'aspiration est reliée à un circuit de mesure (40) comprenant un circuit d'aspiration (41) équipé d'un capteur de pression (42) et connecté à un organe générateur de vide (43), par l'intermédiaire d'un orifice à débit critique (44).

11. Dispositif selon la revendication 10,
caractérisé en ce que le générateur de vide (43) est de type venturi et est alimenté par un flux d'air contrôlé par une électrovanne.

12. Dispositif selon l'une des revendications 9 et 10,
caractérisé en ce que l'acquisition des valeurs détectées par le capteur (42) est effectuée par un micro-ordinateur qui assure les tâches de commande du dispositif et qui gère les données.

## Patentansprüche

1. Vorrichtung zur Bestimmung der Porosität eines Filterelementes, wobei diese Vorrichtung wie ein Sphinkter wirkende Mittel zur Einkapselung des Filterelementes, Mittel zur Erzeugung eines Luftdurchsatzes durch das Filterelement, sobald das Filterelement eingekapselt ist, und Mittel zur Bestimmung wenigstens eines Parameters bezüglich des Flüssigkeitsstroms, der das Filterelement durchquert, verwendet, dadurch gekennzeichnet, daß die Einkapselungsmittel eine Reihe von Einkapselungsmodulen (2 bis 5) umfassen, die in dichter Folge koaxial angeordnet sind und durch jeweils von den anderen verschiedene Steuermittel unabhängig voneinander wie ein Sphinkter wirken.

2. Vorrichtung nach Anspruch 1, dadurch gekennzeichnet, daß die Anzahl der verwendeten Einkapselungsmodule (2 bis 5) von der Länge des Filterelementes abhängt, so daß Filter mit unterschiedlicher Länge eingekapselt werden können.

3. Vorrichtung nach einem der Ansprüche 1 und 2, dadurch gekennzeichnet, daß die Einkapselungsmodule (2 bis 5) ein röhrenförmiges Bauteil (1) verwenden, dessen zylindrische Innenwand mit einer röhrenförmigen, elastischen Membran verstärkt ist, die zusammen mit der erwähnten Wand ein Zwischenraumvolumen (11 bis 14) definiert, dessen Druck durch einen Steuerkreis so modifiziert werden kann, daß die Membran die folgenden zwei Zustände annehmen kann:
- einen zur Wand hin zurückgezogenen Zustand, wobei sie einen Abschnitt mit maximalem Durchlaß bietet,
- einen zur Mitte des Bauteils (1) hin gerichteten Zustand, in welchem sie einen Abschnitt mit verringertem Durchlaß bietet, so daß sie an einem Filterelement, das eingesetzt wird, wenn sie sich im zurückgezogenen Zustand befindet, zur Anlage kommen und dieses teilweise einkapseln kann.

4. Vorrichtung nach Anspruch 3, dadurch gekennzeichnet, daß der Übergang von einem Zustand in den anderen durch Einlaß einer unter Druck stehenden Flüssigkeit in das Innere des Zwischenraumvolumens (11 bis 14) oder im umgekehrten Fall durch Erzeugen eines Unterdrucks innerhalb des Volumens erfolgt.

5. Vorrichtung nach einem der vorhergehenden Ansprüche, dadurch gekennzeichnet, daß das erwähnte röhrenförmige Bauteil (1) allen Einkapselungsmodulen (2 bis 5) gemeinsam ist.

6. Vorrichtung nach Anspruch 5, dadurch gekennzeichnet, daß die elastischen, röhrenförmigen Membranen der verschiedenen Einkapselungsmodule (2 bis 5) eng aneinander angeordnet und dank einer Vielzahl ringförmiger Dichtungen (6 bis 10), die in engem Kontakt mit dem erwähnten Bauteil sind, in dichter Weise verbunden sind, so daß sie eine Reihe von Zwischenraumvolumina (11 bis 14) bilden, die jeweils durch die Innenwand des Bauteils (1), einen Membranabschnitt und zwei aufeinanderfolgende, ringförmige Dichtungen begrenzt sind, wobei jedes dieser Volumina (11 bis 14) mit einem Steuerkreis (16 bis 19) verbunden ist, die sich von denjenigen der anderen unterscheidet.

7. Vorrichtung nach Anspruch 6, dadurch gekennzeichnet, daß die Zwischenraumvolumina mit einem Verteiler (15) kommunizieren, der auf dem Bauteil mittels entsprechender, radial angeordneter Bohrungen (16 bis 19) montiert ist.

8. Vorrichtung nach Anspruch 7, dadurch gekennzeichnet, daß der Verteiler aus einem Einschub besteht, der durch ein zylindrisches, röhrenförmiges Element (20) gebildet wird, das durch drei Abdichtungen (21, 22, 23) gleitend auf dem Bauteil (1) montiert ist, die axial so versetzt sind, daß sie zwei ringförmige Kammern (24, 25) begrenzen, wobei eine davon mit einem permanenten Ansaugkreis verbunden ist, während die andere mit einem Steuerkreis verbunden ist, der das Ansaugen, die Entlüftung oder sogar das Einspritzen einer unter Druck stehenden Flüssigkeit bewirken kann.

9. Vorrichtung nach einem der vorhergehenden Ansprüche, dadurch gekennzeichnet, daß die erwähnten Einkapselungsmittel zusätzlich, neben einem Basismodul zur Einkapselung (5), nacheinander umfassen:
- einen elastischen Membranabschnitt (36), der einen zusätzlichen, als Anschlag für das Filterstäbchen bei seiner Einführung dienenden Sphinkter bildet,
- einen Stopfen (37), der von einer offenen Stellung zu einer geschlossenen Stellung wechseln kann, um das Bauteil (1) hermetisch zu verschließen, indem er in dessen Innerem eine Ansaugkammer begrenzt.

10. Vorrichtung nach Anspruch 9, dadurch gekennzeichnet, daß die Ansaugkammer mit einem Meßkreis (40) verbunden ist, der einen Ansaugkreis (41) umfaßt, welcher mit einem Druckfühler (42) ausgestattet und mittels einer Öffnung mit kritischem Durchsatz (44) mit einem Organ zur Erzeugung eines Unterdrucks (43) verbunden ist.

11. Vorrichtung nach Anspruch 10, dadurch gekennzeichnet, daß der Unterdruckgenerator (43) eine Venturidüse ist und über ein Elektroventil mit einem kontrollierten Luftstrom gespeist wird.

12. Vorrichtung nach einem der Ansprüche 9 und 10, dadurch gekennzeichnet, daß die Erfassung der von dem Meßfühler (42) gemessenen Werte durch einen Mikrocomputer erfolgt, der die Steuerbefehle der Vorrichtung gewährleistet und die Daten verwaltet.

## Claims

1. A device for measuring the porosity of a filter element, said device using a filter element encapsulating means acting like a sphincter, a means enabling an air flow to be generated through said filter element once said filter element has been encapsulated, and a means enabling measurement of at least one parameter relating to the fluid flow through said filter element,
characterized in that said encapsulating means comprises a succession of encapsulation modules (2 to 5) arranged coaxially end to end and each acting like a sphincter, independently of the others, by means of a control means separate from that of the others.

2. The device as claimed in claim 1,
characterized in that the number of encapsulation modules (2 to 5) depends on the length of said filter element, so as to encapsulate filters of different lengths.

3. The device as claimed in one of claims 1 and 2,
characterized in that said encapsulation modules (2 to 5) use a tubular body (1) whose inner cylindrical wall is lined with an elastic tubular membrane which, along with said wall, delimits an intermediate volume (11 to 14) in which the pressure can be modified by a control circuit so that said membrane can be in the following two states:
- a retracted state, retracted towards said wall and providing a cross section of maximum passage,
- an outspread state, spread out towards the center of said body (1), in which it has a cross section of reduced passage, so as to be able to apply itself against and partially encapsulate a filter element disposed inside said body (1) while it was in the retracted state.

4. The device as claimed in claim 3,
characterized in that the switching from one of said states to the other is achieved by admitting, into said intermediate volume (11 to 14), a pressurized fluid or, on the contrary, by creating a partial vacuum inside said volume.

5. The device as claimed in one of the preceding claims,
characterized in that said tubular body (1) is common to all said encapsulation modules (2 to 5).

6. The device as claimed in claim 5,
characterized in that said elastic tubular membranes of said different encapsulation modules (2 to 5) are disposed end to end and connected to one another, in a tight manner, by means of a multiplicity of annular distance tubes (6 to 10) in airtight contact with said body, so as to constitute a succession of intermediate volumes (11 to 14) each delimited by said inner wall of said body (1), a membrane portion and two successive annular distance tubes, each of these volumes (11 to 14) being connected to a control circuit (16 to 19) separate from that of the others.

7. The device as claimed in claim 6,
characterized in that said intermediate volumes communicate with a distributor (15) mounted on said body, via respective radial bores (16 to 19).

8. The device as claimed in claim 7,
characterized in that said distributor consists in a slide valve formed by a cylindrical tubular sleeve element (20) mounted slidably on said body (1) by means of three tightness seals (21, 22, 23) axially offset so as to delimit two annular chambers (24, 25) of which one is connected to a permanent suction circuit, with the other being connected to a control circuit capable of generating a suction or an airing, or even an injection of pressurized fluid.

9. The device as claimed in one of the preceding claims,
characterized in that said encapsulation means further comprises successively, above a basic encapsulation module (5) :
- an elastic membrane portion (36) forming an additional sphincter acting as a retaining stop for the filter stick when the latter is inserted,
- a sealing shutter (37) susceptible of changing from an open position to a closed position in which it tightly seals the body (1), by delimiting a suction chamber inside the latter.

10. The device as claimed in claim 9,
characterized in that said suction chamber is connected to a measuring circuit (40) which comprises a suction circuit (41) fitted with a pressure sensor (42) and connected to a mechanism (43) for generating a static vacuum via a critical flow rate orifice (44).

11. The device as claimed in claim 10, .
characterized in that the vacuum generator (43) is of the venturi type and is fed with an air flow commanded by an electrovalve.

12. The device as claimed in one of claims 9 and 10,
characterized in that the values detected by said sensor (42) are acquired by a microcomputer which performs the device control tasks and data management.
